# FASCICULE DE BREVET EUROPEEN

(11) **EP 3 472 488 B1**
(45) Date de publication et mention de la délivrance du brevet: **20.12.2023**
(21) Numéro de dépôt: 17735185.5
(22) Date de dépôt: 02.06.2017
(51) Int. Cl.: F16F 15/14

(54) **DISPOSITIF D'AMORTISSEMENT PENDULAIRE**
PENDELDÄMPFUNGSVORRICHTUNG
PENDULUM DAMPING DEVICE

(30) Priorité: 16.06.2016 FR 1655592
(43) Date de publication de la demande: 24.04.2019
(73) Titulaire: Valeo Embrayages, 80009 Amiens Cedex 2 (FR)
(72) Inventeur: MALLEY, Matthieu, 80009 Amiens cedex 2 (FR); COUVILLERS, Didier, 80009 AMIENS cedex 2 (FR)
(74) Mandataire: Valeo Powertrain Systems
(86) Numéro de dépôt international: PCT/FR2017/051393
(87) Numéro de publication internationale: WO 2017/216444

(56) Documents cités:
- WO-A1-2015/086944
- DE-A1-102008 005 138
- DE-A1-102011 085 400

## Description

La présente invention concerne un dispositif d'amortissement pendulaire, notamment pour un système de transmission de véhicule automobile.

Dans une telle application, le dispositif d'amortissement pendulaire peut être intégré à un système d'amortissement de torsion d'un embrayage apte à relier sélectivement le moteur thermique à la boîte de vitesses, afin de filtrer les vibrations dues aux acyclismes du moteur. Un tel système d'amortissement de torsion est par exemple un double volant amortisseur.

En variante, dans une telle application, le dispositif d'amortissement pendulaire peut être intégré à un disque de friction de l'embrayage ou à un convertisseur de couple hydrodynamique ou à un volant solidaire du vilebrequin ou à un double embrayage à sec ou humide ou à un simple embrayage humide.

Un tel dispositif d'amortissement pendulaire met classiquement en oeuvre un support et un ou plusieurs corps pendulaires mobiles par rapport à ce support, le déplacement par rapport au support de chaque corps pendulaire étant guidé par deux organes de roulement coopérant d'une part avec des pistes de roulement solidaires du support, et d'autre part avec des pistes de roulement solidaires des corps pendulaires. Chaque corps pendulaire comprend par exemple deux masses pendulaires rivetées entre elles.

Il est par exemple connu de la demande DE 10 2011 086 532 de guider le déplacement par rapport au support de plusieurs corps pendulaires au moyen de deux organes de roulement par corps pendulaire. Chaque organe de roulement présente des portions cylindriques de rayons différents :
- une première portion cylindrique de premier rayon coopérant avec une première piste de roulement solidaire du support, et
- deux deuxièmes portions cylindriques, chacune ayant un même deuxième rayon et coopérant avec une deuxième piste de roulement solidaire du corps pendulaire.

Selon DE 10 2011 086 532, on prévoit que ces première et deuxièmes pistes de roulement permettent non seulement un déplacement des corps pendulaires en translation autour d'un axe fictif parallèle à l'axe de rotation du support, mais également un déplacement en rotation de chaque corps pendulaire autour de son centre de gravité, un tel mouvement étant encore appelé « mouvement combiné ».

Du fait de ce mouvement, un glissement de l'un au moins des organes de roulement se produit. Ce glissement dégrade les performances de filtrage fournies par le pendule. Ce glissement peut également se produire pour des dispositifs d'amortissement pendulaire dans lesquels chaque corps pendulaire se déplace uniquement en translation autour de l'axe fictif parallèle à l'axe de rotation du support.

WO 2015/086944 A1 divulgue un dispositif d'amortissement pendulaire, comprenant un support, au moins un corps pendulaire et un organe de roulement. L'organe de roulement comprenant une première portion cylindrique de premier rayon coopérant avec au moins une première piste de roulement solidaire du support, et un deuxième portion cylindrique de deuxième rayon coopérant avec au moins une deuxième piste de roulement solidaire du corps pendulaire. Lors d'au moins une partie de son déplacement, l'organe de roulement roulant simultanément sur un couple de fractions de pistes de roulement, formé par une fraction de la deuxième piste de roulement de troisième rayon et par une fraction de la première piste de roulement de quatrième rayon.

Il existe un besoin pour bénéficier d'un dispositif d'amortissement pendulaire, notamment à mouvement combiné, dont les performances de filtrage restent satisfaisantes.

L'invention a pour but de répondre à ce besoin et elle y parvient, selon l'un de ses aspects, à l'aide d'un dispositif d'amortissement pendulaire, comprenant :
- un support apte à se déplacer en rotation autour d'un axe,
- au moins un corps pendulaire, mobile par rapport au support, et,
- au moins un organe de roulement,

l'organe de roulement comprenant, afin de guider le déplacement du corps pendulaire par rapport au support :
   - une première portion cylindrique de premier rayon coopérant avec au moins une première piste de roulement solidaire du support, et
   - une deuxième portion cylindrique de deuxième rayon coopérant avec une deuxième piste de roulement solidaire du corps pendulaire,
le rapport entre le deuxième rayon et le premier rayon définissant un premier rapport,
lors d'au moins une partie de son déplacement, l'organe de roulement roulant simultanément sur un couple de fractions de pistes de roulement, formé par une fraction de la deuxième piste de roulement de troisième rayon, et par une fraction de la première piste de roulement de quatrième rayon, le rapport entre le troisième rayon et le quatrième rayon définissant un deuxième rapport pour ledit couple de fractions de pistes de roulement,
le rapport entre le deuxième rapport et le premier rapport définissant un troisième rapport pour ledit couple de fractions de pistes de roulement, ce troisième rapport étant choisi de manière à réduire, notamment supprimer, le glissement de l'organe de roulement lorsqu'il roule sur ledit couple de fractions de pistes de roulement.

Le roulement de l'organe de roulement sur au moins un couple de fractions de pistes de roulement peut alors mettre en oeuvre en même temps des valeurs de premier rayon, de deuxième rayon, de troisième rayon et de quatrième rayon choisies pour que la valeur du troisième rapport ainsi obtenue pour ces rayons permette de réduire, notamment supprimer, le glissement de cet organe de roulement sur ce couple de fractions de pistes de roulement.

Ce choix de valeurs pour les premier, deuxième, troisième et quatrième rayons peut permettre de maintenir chaque angle de contact de l'organe de roulement avec une des pistes de roulement inférieur à l'angle du cône de frottement, notamment pour tout déplacement de cet organe de roulement. L'angle de contact d'un organe de roulement, roulant simultanément sur un couple de fractions de pistes de roulement, avec l'une de ces fractions est défini comme l'angle aigu entre les projections dans un même plan orthogonal à l'axe de rotation du support:
- de la droite reliant les deux points de contact simultanés, l'un de ces points de contact étant associé au contact avec la fraction de la première piste de roulement et l'autre de ces points de contact étant associé au contact avec la fraction de la deuxième piste de roulement et,
- la droite passant par un des points de contact précités et le centre de l'organe de roulement.

L'angle du cône de frottement est défini comme l'angle dont la valeur est l'arc tangente du coefficient de frottement entre l'organe de roulement et la fraction de la piste de roulement en question. Le troisième rapport permet ainsi de réduire, notamment de rendre nul ou quasi nul, cet angle de contact.

Le premier rapport peut être inférieur ou égal à 1.

Le deuxième rapport peut être supérieur ou égal à 1 pour ledit couple de fractions de pistes de roulement. Lorsque le deuxième rapport est supérieur à 1, pour un couple de fractions de pistes de roulement donné, la piste de roulement solidaire du corps pendulaire présente un rayon supérieur à celui de la piste de roulement solidaire du support.

Pour au moins un couple de fractions de pistes de roulement donné, notamment pour chaque couple de fractions de pistes de roulement, le deuxième rapport peut être supérieur à 1,1, notamment être supérieur à 1,2.

L'organe de roulement peut rouler, lors de la totalité de son déplacement, sur des couples successifs de fractions de pistes de roulement, chaque couple étant formé par une fraction de la deuxième piste de roulement de troisième rayon et par une fraction de la première piste de roulement de quatrième rayon, le troisième rapport étant par exemple choisi pour chaque couple de fractions de pistes de roulement de manière à réduire, notamment supprimer, le glissement de l'organe de roulement lorsqu'il roule sur chaque couple de fractions de pistes de roulement. Dans ce cas, on réduit, voire on supprime, le glissement de l'organe de roulement sur tout son déplacement. En tout point, l'angle de contact avec une fraction d'une piste de roulement peut être inférieur à l'angle du cône de frottement, l'angle de contact étant par exemple nul.

Lors de la totalité du déplacement de l'organe de roulement, le deuxième rapport peut être supérieur ou égal à 1.

Au sens de la présente demande :
- « axialement » signifie « parallèlement à l'axe de rotation du support » ou « parallèlement à l'axe longitudinal de l'organe de roulement », selon le cas,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « orthoradialement » signifie « perpendiculairement à une direction radiale »,
- « solidaire » signifie « rigidement couplé »,
- l'ordre d'excitation d'un moteur thermique est égal au nombre d'explosions de ce moteur par tour de vilebrequin, et
- la position de repos d'un corps pendulaire est celle dans laquelle ce corps pendulaire est centrifugé sans être soumis à des oscillations de torsion provenant des acyclismes du moteur thermique.

La deuxième piste de roulement solidaire du corps pendulaire peut définir une succession de troisièmes rayons, la première piste de roulement solidaire du support définissant une succession de quatrièmes rayons, et à chaque couple de fractions de pistes de roulement ayant un troisième et un quatrième rayon correspond une valeur de troisième rapport permettant de réduire, voire supprimer, le glissement de l'organe de roulement sur ces pistes de roulement.

En variante, la deuxième piste de roulement solidaire du corps pendulaire peut définir un unique troisième rayon et la première piste de roulement solidaire du support peut définir un unique quatrième rayon, ce quatrième et ce troisième rayon étant choisis avec les premier et deuxième rayons de manière à ce que le troisième rapport ait une valeur permettant de réduire, voire de supprimer, le glissement lors du roulement de l'organe de roulement sur les pistes de roulement.

Le troisième rapport peut être fonction de l'ordre auquel le corps pendulaire est accordé. En effet, le glissement de l'organe de roulement peut différer en fonction de l'ordre auquel le corps pendulaire est accordé.

Le corps pendulaire est par exemple accordé à l'ordre 1, qui correspond à l'ordre d'excitation d'un moteur thermique dont seuls deux cylindres sont actifs, auquel cas le ou chaque troisième rapport peut être égal à 2,3, à 20% près.

En variante, le corps pendulaire est par exemple accordé à l'ordre 1,5, qui correspond à l'ordre d'excitation d'un moteur thermique dont seuls trois cylindres sont actifs, auquel cas le ou chaque troisième rapport peut être égal à 1,6, à 20% près.

En variante encore, le corps pendulaire est par exemple accordé à l'ordre 2, qui correspond à l'ordre d'excitation d'un moteur thermique dont seuls quatre cylindres sont actifs, auquel cas le ou chaque troisième rapport peut être égal à 1,33, à 20% près.

En variante encore, le corps pendulaire peut être accordé à l'ordre 3, qui correspond à l'ordre d'excitation d'un moteur thermique dont seuls six cylindres sont actifs, auquel cas le ou chaque troisième rapport peut être égal à 1,15, à 20% près.

En variante encore, le corps pendulaire peut être accordé à l'ordre 4, qui correspond à l'ordre d'excitation d'un moteur thermique dont seuls huit cylindres sont actifs, auquel cas le ou chaque troisième rapport peut être égal à 1,1, à 20% près.

Une courbe représentant la valeur du troisième rapport permettant de supprimer le glissement de l'organe de roulement en fonction de l'ordre auquel le corps pendulaire est accordé peut être tracée par interpolation et extrapolation à partir des cas précités correspondant à des ordres égaux à 1, à 1,5, à 2, à 3 et à 4 et, pour tout autre ordre auquel peut être accordé le corps pendulaire, la valeur de troisième rapport s'obtient par lecture sur la courbe.

Dans tout ce qui précède, la ou les premières pistes de roulement solidaires du support et la ou les deuxièmes pistes de roulement solidaires du corps pendulaire peuvent avoir des formes telles que le corps pendulaire soit uniquement guidé en translation autour d'un axe fictif parallèle à l'axe de rotation du support.

En variante, dans tout ce qui précède, la ou les premières pistes de roulement solidaires du support et la ou les deuxièmes pistes de roulement solidaires du corps pendulaire peuvent avoir des formes telles que le corps pendulaire soit guidé :
- en translation autour d'un axe fictif parallèle à l'axe de rotation du support, et
- en rotation autour du centre de gravité dudit corps pendulaire.

Le choix précité des premier, deuxième, troisième et quatrième rayons permet alors de réduire, voire de supprimer, les problèmes de glissement de l'organe de roulement dans le cas d'un mouvement combiné pour tout ou partie des couples de fractions de pistes de roulement.

Le pourcentage de combinaison peut être défini comme égal au ratio entre :
- la distance du centre de gravité du corps pendulaire à l'axe de rotation du support, et
- la distance entre ce centre de gravité du corps pendulaire et le centre instantané de rotation de ce corps pendulaire,
le troisième rapport étant fonction du pourcentage de combinaison.

Ainsi, la valeur du troisième rapport peut être fonction du pourcentage de combinaison et, le cas échéant, de l'ordre auquel est accordé le corps pendulaire.

Le corps pendulaire est par exemple accordé à l'ordre 1, le corps pendulaire présente par exemple un pourcentage de combinaison égal à 100%, et le ou chaque troisième rapport est alors égal à 2,3, à 20% près.

En variante, le corps pendulaire est par exemple accordé à l'ordre 1,5, le corps pendulaire présente par exemple un pourcentage de combinaison égal à 100%, et le ou chaque troisième rapport est alors égal à 1,6, à 20% près.

En variante encore, le corps pendulaire est par exemple accordé à l'ordre 2, le corps pendulaire présente par exemple un pourcentage de combinaison égal à 100%, et le ou chaque troisième rapport est alors égal à 1,33, à 20% près.

En variante encore, le corps pendulaire est par exemple accordé à l'ordre 3, le corps pendulaire présente par exemple un pourcentage de combinaison égal à 100%, et le ou chaque troisième rapport est égal à 1,15, à 20% près.

En variante encore, le corps pendulaire est par exemple accordé à l'ordre 4, le corps pendulaire présente par exemple un pourcentage de combinaison égal à 100%, et le ou chaque troisième rapport est égal à 1,1, à 20% près.

La courbe représentant la valeur du troisième rapport permettant de supprimer le glissement de l'organe de roulement en fonction de l'ordre auquel le corps pendulaire est accordé pour un pourcentage de combinaison égal à 100% peut être tracée par interpolation et extrapolation à partir des cas précités correspondant à des ordres égaux à 1, à 1,5, à 2, à 3 et à 4 et, pour tout autre ordre auquel peut être accordé le corps pendulaire et pour un pourcentage de combinaison égal à 100%, la valeur de troisième rapport s'obtient par lecture sur la courbe.

Le déplacement du corps pendulaire par rapport au support pour filtrer des oscillations de torsion peut être guidé par deux organes de roulement distincts et dédiés chacun à ce corps pendulaire. Chacun de ces organes de roulement peut présenter un premier rayon et un deuxième rayon permettant, avec les troisième et quatrième rayons des pistes de roulement, que le troisième rapport ait une valeur permettant de réduire, voire supprimer, le glissement dudit organe de roulement sur le ou chaque couple de fractions de pistes de roulement.

Selon un exemple de mise en oeuvre de l'invention, le support du dispositif d'amortissement pendulaire peut être unique et chaque corps pendulaire peut comprendre deux masses pendulaires respectivement disposées axialement d'un côté du support. Ces masses pendulaires peuvent alors être solidarisées entre elles via un ou plusieurs organes de liaison tels que des rivets. Chacune de la première et de la deuxième masse pendulaire peut définir une deuxième piste de roulement.

Chaque organe de roulement guidant le déplacement d'un corps pendulaire peut alors coopérer d'une part avec une première piste de roulement solidaire du support, et d'autre part avec deux deuxièmes pistes de roulement solidaires du corps pendulaire, chaque masse pendulaire présentant une cavité dont une partie du bord définit une de ces deuxièmes pistes de roulement. Les deux pistes de roulement peuvent présenter la même forme. En un même instant, un même organe de roulement peut rouler sur une fraction de l'une de ces deuxièmes pistes de roulement et sur une fraction de l'autre piste de roulement, et ces fractions peuvent présenter un même troisième rayon. Autrement dit, le troisième rapport vaut indifféremment pour l'une ou l'autre de ces deuxièmes pistes de roulement.

Chaque organe de roulement peut être reçu dans une cavité du support, une partie du contour de cette cavité définissant la première piste de roulement avec laquelle coopère cet organe de roulement.

Chaque organe de roulement peut alors comprendre successivement axialement:
- une portion disposée dans une cavité de la première masse pendulaire et coopérant avec la deuxième piste de roulement formée par une partie du contour de cette cavité,
- une portion disposée dans une cavité du support et coopérant avec la première piste de roulement formée par une partie du contour de cette cavité, et
- une portion disposée dans une cavité de la deuxième masse pendulaire et coopérant avec la deuxième piste de roulement formée par une partie du contour de cette cavité.

Le corps pendulaire comprend par exemple deux organes de liaison appariant chaque masse pendulaire de ce corps, chaque organe de liaison étant solidaire de chacune de ces masses pendulaires.

Chaque organe de liaison peut s'étendre entre deux extrémités axiales et être fixé aux deux masses pendulaires qu'il apparie par rivetage, vissage ou soudure ou emmanchement à force.

Chaque organe de liaison regroupe par exemple plusieurs rivets, et cet organe de liaison est reçu dans une fenêtre du support, tandis que l'organe de roulement est reçu dans une cavité du support, distincte d'une fenêtre recevant un organe de liaison.

En variante, selon un autre exemple de mise en oeuvre de l'invention, le dispositif d'amortissement pendulaire comprend deux supports axialement décalés et solidaires, un corps pendulaire étant alors formé par une masse pendulaire unique disposée axialement entre les deux supports, ou un corps pendulaire étant formé par plusieurs masses pendulaires solidarisées entre elles. Toutes ces masses pendulaires d'un même corps pendulaire peuvent alors être disposées axialement entre les deux supports. En variante seule(s) certaine(s) masse(s) pendulaire(s) du corps pendulaire s'étend(ent) axialement entre les deux supports, d'autre(s) masse(s) pendulaire(s) de ce corps pendulaire s'étendant axialement au-delà de l'un ou de l'autre des supports. Le cas échéant, deux premières pistes de roulement de même forme sont chacune définies par un des supports et une ou plusieurs deuxièmes pistes de roulement de même forme sont définies par le corps pendulaire.

Dans tout ce qui précède, chaque corps pendulaire peut comprendre au moins un organe d'amortissement de butée contre le support. Chacun de ces organes d'amortissement de butée peut alors venir en contact avec le support pour amortir la butée du corps pendulaire contre ce dernier, par exemple :
- à l'issue d'un déplacement dans le sens trigonométrique de ce corps pendulaire depuis la position de repos pour filtrer une oscillation de torsion, et/ou
- à l'issue d'un déplacement dans le sens non-trigonométrique de ce corps pendulaire depuis la position de repos pour filtrer une oscillation de torsion, et/ou
- en cas de chute radiale du corps pendulaire, par exemple lors de l'arrêt du moteur thermique du véhicule.

Le corps pendulaire comprend par exemple deux organes d'amortissement de butée et deux organes de liaison, chaque organe d'amortissement de butée étant respectivement associé à un organe de liaison. Chaque organe d'amortissement de butée est par exemple fixé à l'organe de liaison auquel il est associé.

Chaque organe d'amortissement de butée peut présenter des propriétés élastiques permettant l'amortissement des chocs liés au contact entre le support et le corps pendulaire. L'organe d'amortissement de butée est par exemple en élastomère ou en caoutchouc. Cet amortissement est alors permis par une compression de l'organe d'amortissement de butée.

Dans tout ce qui précède, le dispositif peut comprendre au moins une pièce d'interposition dont au moins une partie est axialement disposée entre le support et une masse pendulaire du corps pendulaire. La pièce d'interposition est par exemple fixée sur une masse pendulaire ou le support, ou formée par un revêtement déposé sur une masse pendulaire ou sur le support. Une telle pièce d'interposition peut ainsi limiter le déplacement axial du corps pendulaire par rapport au support, évitant ainsi les chocs axiaux entre lesdites pièces, et ainsi une usure et des bruits non souhaités, notamment lorsque le support et/ou la masse pendulaire sont en métal. Plusieurs pièces d'interposition, par exemple sous forme de patins, peuvent être prévues. Les pièces d'interposition sont notamment réalisées en un matériau amortissant, tel que du plastique ou du caoutchouc.

Les pièces d'interposition sont par exemple portées par les corps pendulaires, étant notamment fixées sur les corps pendulaires ou formées par un revêtement déposé sur les corps pendulaires. Les pièces d'interposition peuvent être positionnées sur un corps pendulaire de manière à ce qu'il y ait toujours au moins une pièce d'interposition dont au moins une partie est axialement interposée entre une masse pendulaire et le support, quelles que soient les positions relatives du support et de ladite masse lors du déplacement par rapport au support du corps pendulaire.

Dans tout ce qui précède, chaque organe de roulement peut coopérer avec la ou les pistes de roulement solidaires du support et avec la ou les pistes de roulement solidaires du corps pendulaire uniquement via sa surface extérieure. Chaque organe de roulement est par exemple un rouleau réalisé en acier. Le rouleau peut être creux ou plein.

Le dispositif comprend par exemple un nombre de corps pendulaires compris entre deux et huit, notamment trois, quatre, cinq ou six corps pendulaires.

Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Dans tout ce qui précède, le support peut être réalisé d'une seule pièce, étant par exemple entièrement métallique.

Dans tout ce qui précède, dans le dispositif d'amortissement pendulaire, toutes les premières pistes de roulement solidaires du support peuvent avoir exactement la même forme entre elles et/ou toutes les deuxièmes pistes de roulement solidaires du corps pendulaires peuvent avoir exactement la même forme entre elles.

Tous les corps pendulaires peuvent être accordés à une même valeur d'ordre, ou encore à des valeurs d'ordre différentes, d'un corps pendulaire à l'autre.

L'invention a encore pour objet, selon un autre de ses aspects, un composant pour système de transmission d'un véhicule automobile, le composant étant notamment un double volant amortisseur, un convertisseur de couple hydrodynamique, un volant solidaire du vilebrequin, un double embrayage à sec ou humide, un simple embrayage humide, un composant de système de transmission hybride, ou un disque de friction, comprenant un dispositif d'amortissement pendulaire défini ci-dessus.

Le support du dispositif d'amortissement pendulaire peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

Dans le cas où le dispositif est intégré à un volant solidaire du vilebrequin, le support peut être solidaire de ce volant.

L'invention a encore pour objet, selon un autre de ses aspects, un procédé de dimensionnement d'un dispositif d'amortissement pendulaire, comprenant :
- un support apte à se déplacer en rotation autour d'un axe,
- au moins un corps pendulaire, mobile par rapport au support, et,
- au moins un organe de roulement,

l'organe de roulement comprenant, afin de guider le déplacement du corps pendulaire par rapport au support :
   - une première portion cylindrique de premier rayon coopérant avec au moins une première piste de roulement solidaire du support, et
   - au moins une deuxième portion cylindrique de deuxième rayon coopérant avec une deuxième piste de roulement solidaire du corps pendulaire,
lors d'au moins une partie de son déplacement, l'organe de roulement roulant simultanément sur un couple de fractions de pistes de roulement, formé par une fraction de la deuxième piste de roulement de troisième rayon et par une fraction de la première piste de roulement de quatrième rayon, le rapport entre le troisième rayon et le quatrième rayon définissant un deuxième rapport pour ledit couple de fractions de pistes de roulement,
procédé comprenant :
   - l'étape selon laquelle on choisit le rapport entre le deuxième rapport et le premier rapport, qui définit un troisième rapport pour ledit couple de fractions de pistes de roulement, de manière à réduire, notamment supprimer, le glissement de l'organe de roulement lorsqu'il roule sur ledit couple de fractions de pistes de roulement.

Tout ou partie des caractéristiques mentionnées en rapport avec le dispositif d'amortissement pendulaire ci-dessus s'applique encore au procédé selon cet autre aspect de l'invention.

En particulier, le procédé peut comprendre l'étape selon laquelle, à partir d'une courbe représentant la valeur du troisième rapport permettant de supprimer le glissement de l'organe de roulement en fonction de l'ordre auquel le corps pendulaire est accordé, cette courbe étant tracée par interpolation et/ou extrapolation à partir de points obtenus pour des ordres prédéfinis, par exemple des ordres égaux à 1, à 1,5, à 2, à 3 et à 4, on obtient la valeur du troisième rapport permettant de supprimer le glissement de l'organe de roulement pour tout ordre auquel peut être accordé le corps pendulaire.

Le procédé peut être réalisé, en tout ou partie, à l'aide d'un système informatique.

L'invention a encore pour objet, selon un autre de ses aspects, un dispositif d'amortissement pendulaire, comprenant :
- un support apte à se déplacer en rotation autour d'un axe,
- au moins un corps pendulaire, mobile par rapport au support, et,
- au moins un organe de roulement,

l'organe de roulement comprenant, afin de guider le déplacement du corps pendulaire par rapport au support:
   - une première portion cylindrique de premier rayon coopérant avec au moins une première piste de roulement solidaire du support, et
   - au moins une deuxième portion cylindrique de deuxième rayon coopérant avec une deuxième piste de roulement solidaire du corps pendulaire,
le rapport entre le deuxième rayon et le premier rayon définissant un premier rapport inférieur ou égal à 1, lors d'au moins une partie de son déplacement, l'organe de roulement roulant simultanément sur un couple de fractions de pistes de roulement, formé par une fraction de la deuxième piste de roulement de troisième rayon et par une fraction de la première piste de roulement de quatrième rayon, le rapport entre le troisième rayon et le quatrième rayon définissant un deuxième rapport pour ledit couple de fractions de pistes de roulement, le deuxième rapport étant supérieur ou égal à 1.

L'invention pourra être mieux comprise à la lecture de la description qui va suivre d'un exemple non limitatif de mise en oeuvre de celle-ci et à l'examen du dessin annexé sur lequel :
- la figure 1 représente un dispositif d'amortissement pendulaire connu auquel s'applique l'invention,
- la figure 2 est un détail du dispositif de la figure 1, et montre en détail l'interaction entre un organe de roulement du dispositif d'amortissement pendulaire et les pistes de roulement, et
- la figure 3 représente une courbe donnant la valeur de troisième rapport permettant, pour un ordre auquel le corps pendulaire est accordé et pour un pourcentage de combinaison égal à 100%, de supprimer le glissement d'un organe de roulement guidant le déplacement de ce corps pendulaire.

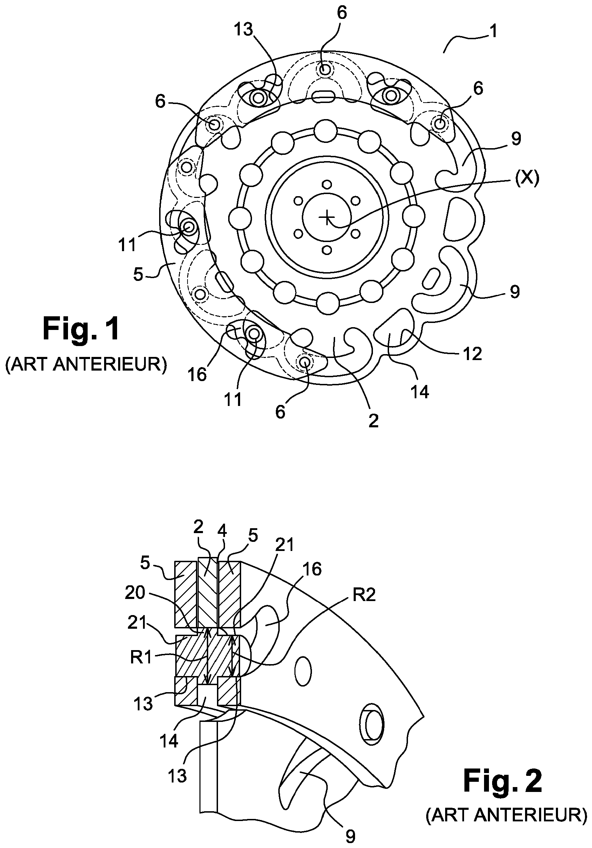

On a représenté sur la figure 1 un dispositif d'amortissement 1 auquel l'invention peut s'appliquer. Le dispositif d'amortissement 1 est de type oscillateur pendulaire. Le dispositif 1 est notamment apte à équiper un système de transmission de véhicule automobile, étant par exemple intégré à un composant non représenté d'un tel système de transmission, ce composant étant par exemple un double volant amortisseur, un convertisseur de couple hydrodynamique ou un disque de friction, ou un volant solidaire de vilebrequin, ou un embrayage simple humide ou un double embrayage à sec ou humide.

Ce composant peut faire partie d'un groupe motopropulseur d'un véhicule automobile, cette dernière comprenant un moteur thermique notamment à deux, trois, quatre, six ou huit cylindres.

De manière connue, un tel composant peut comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Dans l'exemple considéré, trois corps pendulaires 3 sont prévus, étant répartis de façon uniforme sur le pourtour de l'axe X. Pour les besoins de la description, seuls deux corps pendulaires 3 sont représentés sur la figure 1.

Le support 2 du dispositif d'amortissement 1 peut être constitué par :
- un élément d'entrée d'un amortisseur de torsion, ou
- un élément de sortie, ou
- un élément de phasage intermédiaire disposé entre deux séries de ressort de l'amortisseur, ou
- un élément lié en rotation à un des éléments précités et distinct de ces derniers, étant alors par exemple un support propre au dispositif 1.

Le support 2 est notamment une rondelle de guidage ou une rondelle de phasage.

Dans l'exemple considéré, le support 2 présente globalement une forme d'anneau comportant deux côtés opposés qui sont ici des faces planes.

Comme on peut le voir sur la figure 1, chaque corps pendulaire 3 comprend dans l'exemple considéré :
- deux masses pendulaires 5, chaque masse pendulaire 5 s'étendant axialement en regard d'un côté du support 2, et
- trois organes de liaison 6 solidarisant les deux masses pendulaires 5.

Les organes de liaison 6, qui sont ici des rivets, sont dans l'exemple considéré décalés angulairement.

Chaque organe de liaison 6 s'étend en partie dans une fenêtre 9 ménagée dans le support. Dans l'exemple considéré, la fenêtre 9 définit un espace vide à l'intérieur du support, cette fenêtre étant délimitée par un contour fermé.

Le dispositif 1 comprend encore dans l'exemple considéré des organes de roulement 11 guidant le déplacement des corps pendulaires 3 par rapport au support 2. Les organes de roulement 11 sont ici des rouleaux qui présentent plusieurs portions cylindriques distinctes. Chaque rouleau 11 présente ici :
- une première portion cylindrique 20 de premier rayon R1, occupant axialement une zone centrale du rouleau, et
- deux deuxièmes portions cylindriques 21 de deuxième rayon R2, encadrant axialement la première portion cylindrique R2. On constate ici que le deuxième rayon R2 est plus petit que le première rayon R1, de sorte que le rapport η1 entre le deuxième rayon R2 et le premier rayon R1, qui sera appelé « premier rapport » est inférieur à 1.

Dans l'exemple décrit, le mouvement par rapport au support 2 de chaque corps pendulaire 3 est guidé par deux organes de roulement 11. Chacun de ces deux organes de roulement est ici identique.

Chaque organe de roulement 11 coopère d'une part via sa première portion cylindrique 20 de premier rayon R1 avec une première piste de roulement 12 définie par le support 2, et qui est ici formée par une partie du contour d'une cavité 14 ménagée dans le support 2 et distincte de la fenêtre 9, et d'autre part via chacune de ses deux deuxièmes portions cylindriques 21 de deuxième rayon R2 avec une deuxième piste de roulement 13 définie par le corps pendulaire 3. Chaque masse pendulaire 5 du corps pendulaire présente ici pour chaque organe de roulement 11 une cavité 16 dont une portion du contour définit une deuxième piste de roulement 13.

Plus précisément, chaque organe de roulement 11 interagit au niveau radialement intérieur via ses deuxièmes portions cylindriques 21 avec les deuxièmes pistes de roulement 13 et au niveau radialement extérieur via sa première portion cylindrique 20 avec la première piste de roulement 12 lors de son déplacement par rapport au support 2 et au corps pendulaire 3.

Ainsi :
- chaque deuxième portion cylindrique 21 de l'organe de roulement 11est disposée dans une cavité 16 de la première masse pendulaire 5 et coopère avec la deuxième piste de roulement 13 formée par une partie du bord de cette cavité 16,
- chaque première portion cylindrique 20 de l'organe de roulement 11 est disposée dans une cavité 14 du support 2 et coopère avec la première piste de roulement 12 formée par une partie du bord de cette cavité 14.

Dans l'exemple décrit, chaque première piste de roulement 12 solidaire du support 2 et chaque deuxième piste de roulement 13 solidaire du corps pendulaire permet que le mouvement de ce corps pendulaire 3 par rapport au support 2 consiste en :
- une translation autour d'un axe fictif parallèle à l'axe de rotation (X) du support 2, et
- une rotation autour du centre de gravité de ce corps pendulaire 3.

Les première 12 et deuxièmes 13 pistes de roulement sont ici choisies pour que le pourcentage de combinaison du mouvement du corps pendulaire 3 dont elles guident le déplacement soit égal à 100%, le pourcentage de combinaison étant tel que défini précédemment.

Toujours dans l'exemple décrit, pour chaque corps pendulaire 3, chaque deuxième piste de roulement 13 définit successivement une pluralité de troisièmes rayons R3 de valeurs différentes et la première piste de roulement 12 définit successivement une pluralité de quatrièmes rayons R4 de valeurs différentes.

A un instant donné, chaque organe de roulement roule simultanément sur une fraction de la première piste de roulement 12 de quatrième rayon R4 et sur une fraction de chaque deuxième piste de roulement 13 de troisième rayon R3. Le rapport η2 entre le troisième rayon R3 et le quatrième rayon R4 des fractions de pistes de roulement sur lesquelles roule successivement un organe de roulement 11 sera appelé « deuxième rapport » par la suite.

Comme cela va être décrit, on peut choisir les valeurs des rayons R1, R2, R3 et R4 les unes par rapport aux autres de manière à ce que le rapport η3 qui sera appelé « troisième rapport » par la suite entre le deuxième rapport η2 et le premier rapport η1 ait une valeur permettant de réduire, notamment supprimer le glissement.

La valeur de troisième rapport η3 peut dépendre de l'ordre auquel on souhaite accorder chaque corps pendulaire 3 et du pourcentage de combinaison du mouvement de ce corps pendulaire 3.

Pour un pourcentage de combinaison égal à 100%, on peut ainsi déterminer la valeur du troisième rapport η3 permettant de supprimer le glissement en fonction des ordres 1, 1,5, 2, 3 et 4 comme suit :

| Valeur du troisième rapport η3 | Ordre du corps pendulaire |
|---|---|
| 2,3 | 1 |
| 1,6 | 1,5 |
| 1,33 | 2 |
| 1,15 | 3 |
| 1,1 | 4 |

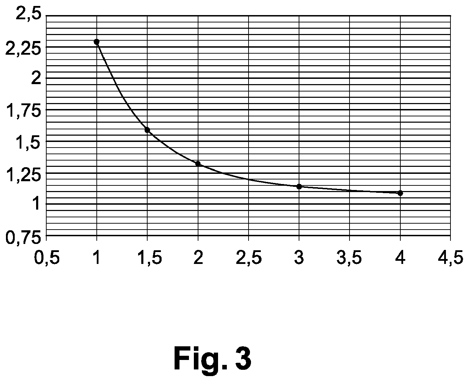

On peut ainsi, par interpolation et extrapolation à partir des couples de points obtenus via le tableau ci-dessus, tracer la courbe de la figure 3, qui montre :
- en ordonnée la valeur du troisième rapport η3 permettant de dimensionner les rayons R1, R2, R3 et R4 associés au déplacement d'un organe de roulement 11 pour que ce dernier roule sans glissement, et
- en abscisse l'ordre auquel le corps pendulaire 3 dont le déplacement est guidé par cet organe de roulement 11 est accordé, et ce pour un pourcentage de combinaison pour le mouvement de ce corps pendulaire 3 égal à 100%.

A titre d'exemple, on peut par exemple réaliser, pour guider le déplacement d'un corps pendulaire 3 accordé à l'ordre 2 et présentant un déplacement avec un pourcentage de combinaison égal à 100%, des organes de roulement 11 ayant une première portion cylindrique 20 de rayon R1 et deux deuxièmes portions cylindriques 21 de rayon R2, chaque organe de roulement 11 coopérant avec une première piste de roulement 12 de quatrième rayon constant R4 et avec deux deuxièmes pistes de roulement 13 ayant chacune un même troisième rayon constant R3, les valeurs R1, R2, R3 et R4 étant comme ci-après afin que le troisième rapport η3 soit égal à 1,33

| | | | | | |
|---|---|---|---|---|---|
| R1 (mm) | 7,5 | 7,5 | 7,5 | 7,5 | 7,5 |
| R2 (mm) | 7,5 | 6 | 5,25 | 5,75 | 5,6 |
| R3 (mm) | 27,1 | 23,2 | 20,9 | 22,5 | 22,1 |
| R4 (mm) | 20,325 | 21,7 | 22,6 | 22 | 22,1 |

On constate dans le tableau que le deuxième rapport η2, qui est égal à R3/R4 est de préférence supérieur ou égal à 1, bien que ce ne soit pas nécessairement le cas.

L'invention n'est pas limitée aux exemples qui viennent d'être décrits.

L'invention s'applique par exemple lorsque le mouvement de chaque corps pendulaire 3 est un simple mouvement de translation, et non un mouvement combiné.

## Revendications

1. Dispositif (1) d'amortissement pendulaire, comprenant :
- un support (2) apte à se déplacer en rotation autour d'un axe (X),
- au moins un corps pendulaire (3), mobile par rapport au support (2), et,
- au moins un organe de roulement (11),
l'organe de roulement (11) comprenant, afin de guider le déplacement du corps pendulaire (3) par rapport au support (2):
- une première portion cylindrique (20) de premier rayon (R1) coopérant avec au moins une première piste de roulement (12) solidaire du support (2), et
- au moins une deuxième portion cylindrique (21) de deuxième rayon (R2) coopérant avec une deuxième piste de roulement (13) solidaire du corps pendulaire (3),
le rapport (η1) entre le deuxième rayon (R2) et le premier rayon (R1) définissant un premier rapport étant notamment inférieur ou égal à 1,
lors d'au moins une partie de son déplacement, l'organe de roulement (11) roulant simultanément sur un couple de fractions de pistes de roulement (12, 13), formé par une fraction de la deuxième piste de roulement (13) de troisième rayon (R3) et par une fraction de la première piste de roulement (12) de quatrième rayon (R4), le rapport (η2) entre le troisième rayon (R3) et le quatrième rayon (R4) définissant un deuxième rapport pour ledit couple de fractions de pistes de roulement, le rapport (η3) entre le deuxième rapport (η2) et le premier rapport (η1) définissant un troisième rapport pour ledit couple de fractions de pistes de roulement, ce troisième rapport (η3) étant choisi de manière à réduire, notamment supprimer, le glissement de l'organe de roulement (11) lorsqu'il roule sur ledit couple de fractions de pistes de roulement.

2. Dispositif selon la revendication 1, l'organe de roulement (11) roulant, lors de la totalité de son déplacement, sur des couples successifs de fractions de pistes de roulement, chaque couple étant formé par une fraction de la deuxième piste de roulement (13) de troisième rayon (R3) et par une fraction de la première piste de roulement (12) de quatrième rayon (R4), le troisième rapport (η3) étant choisi pour chaque couple de fractions de pistes de roulement de manière à réduire, notamment supprimer, le glissement de l'organe de roulement (11) lorsqu'il roule sur chaque couple de fractions de pistes de roulement.

3. Dispositif selon la revendication 1 ou 2, le deuxième rapport (η2) étant supérieur ou égal à 1 pour ledit couple de fractions de pistes de roulement.

4. Dispositif selon l'une quelconque des revendications 1 à 3, le troisième rapport (η3) étant fonction de l'ordre auquel le corps pendulaire (3) est accordé.

5. Dispositif selon la revendication 4, le corps pendulaire (3) étant accordé à l'ordre 1, et le ou chaque troisième rapport (η3) étant égal à 2,3, à 20% près, ou
le corps pendulaire (3) étant accordé à l'ordre 1,5, et le ou chaque troisième rapport (η3) étant égal à 1,6, à 20% près, ou
le corps pendulaire (3) étant accordé à l'ordre 2, et le ou chaque troisième rapport (η3) étant égal à 1,33, à 20% près, ou
le corps pendulaire (3) étant accordé à l'ordre 3, et le ou chaque troisième rapport (η3) étant égal à 1,15, à 20% près, ou
le corps pendulaire (3) étant accordé à l'ordre 4, et le ou chaque troisième rapport (η3) étant égal à 1,1, à 20% près.

6. Dispositif selon l'une quelconque des revendications précédentes, la première piste de roulement (12) solidaire du support (2) définissant un unique quatrième rayon (R4) et la deuxième piste de roulement (13) solidaire du corps pendulaire (3) définissant un unique troisième rayon (R3).

7. Dispositif selon l'une quelconque des revendications précédentes, la première piste de roulement (12) solidaire du support (2) et la deuxième piste de roulement (13) solidaire du corps pendulaire (3) ayant des formes telles que le corps pendulaire (3) soit guidé en translation autour d'un axe fictif parallèle à l'axe de rotation (X) du support (2), et en rotation autour du centre de gravité dudit corps pendulaire (3).

8. Dispositif selon la revendication précédente, le pourcentage de combinaison (M_{R}) étant défini pour le déplacement du corps pendulaire (3) comme égal au ratio entre :
- la distance du centre de gravité du corps pendulaire (3) à l'axe de rotation (X) du support, et
- la distance entre ce centre de gravité du corps pendulaire (3) et le centre instantané de rotation de ce corps pendulaire (3),
et le troisième rapport (η3) étant fonction du pourcentage de combinaison (M_{R}).

9. Dispositif selon la revendication 8, le corps pendulaire (3) étant accordé à l'ordre 1, présentant un pourcentage de combinaison (M_{R}) égal à 100%, et le ou chaque troisième rapport (η3) étant égal à 2,3, à 20% près, ou
le corps pendulaire (3) étant accordé à l'ordre 1,5, présentant un pourcentage de combinaison (M_{R}) égal à 100%, et le ou chaque troisième rapport (η3) étant égal à 1,6, à 20% près, ou
le corps pendulaire (3) étant accordé à l'ordre 2, présentant un pourcentage de combinaison (M_{R}) égal à 100%, et le ou chaque troisième rapport (η3) étant égal à 1,33, à 20% près, ou
le corps pendulaire (3) étant accordé à l'ordre 3, présentant un pourcentage de combinaison (M_{R}) égal à 100%, et le ou chaque troisième rapport (η3) étant égal à 1,15, à 20% près, ou
le corps pendulaire (3) étant accordé à l'ordre 4, présentant un pourcentage de combinaison (M_{R}) égal à 100%, et le ou chaque troisième rapport (η3) étant égal à 1,1, à 20% près.

10. Dispositif selon l'une quelconque des revendications précédentes, le corps pendulaire (3) comprenant une première et une deuxième masses pendulaires (5) espacées axialement l'une par rapport à l'autre et mobiles par rapport au support (2), la première masse pendulaire (5) étant disposée axialement d'un premier côté (4) du support (2) et la deuxième masse pendulaire (5) étant disposée axialement d'un deuxième côté (4) du support (2), et au moins un organe de liaison (6) de la première et de la deuxième masses pendulaires (5) appariant lesdites masses pendulaires (5), chacune de la première et de la deuxième masse pendulaire (5) définissant une deuxième piste de roulement (13).

11. Composant pour système de transmission d'un véhicule automobile, le composant étant notamment un double volant amortisseur, un convertisseur de couple hydrodynamique, un volant solidaire du vilebrequin, un double embrayage à sec ou humide, ou un disque de friction pour embrayage ou un simple embrayage humide, comprenant un dispositif d'amortissement (1) selon l'une quelconque des revendications 1 à 10.

12. Procédé de dimensionnement d'un dispositif d'amortissement pendulaire, comprenant :
- un support apte à se déplacer en rotation autour d'un axe,
- au moins un corps pendulaire, mobile par rapport au support, et,
- au moins un organe de roulement,
l'organe de roulement comprenant, afin de guider le déplacement du corps pendulaire par rapport au support :
- une première portion cylindrique de premier rayon coopérant avec au moins une première piste de roulement solidaire du support, et
- au moins une deuxième portion cylindrique de deuxième rayon coopérant avec une deuxième piste de roulement solidaire du corps pendulaire,
le rapport entre le deuxième rayon et le premier rayon définissant un premier rapport inférieur ou égal à 1,
lors d'au moins une partie de son déplacement, l'organe de roulement roulant simultanément sur un couple de fractions de pistes de roulement, formé par une fraction de la deuxième piste de roulement de troisième rayon et par une fraction de la première piste de roulement de quatrième rayon, le rapport entre le troisième rayon et le quatrième rayon définissant un deuxième rapport pour ledit couple de fractions de pistes de roulement,
procédé comprenant :
- l'étape selon laquelle on choisit le rapport entre le deuxième rapport et le premier rapport, qui définit un troisième rapport pour ledit couple de fractions de pistes de roulement, de manière à réduire, notamment supprimer, le glissement de l'organe de roulement lorsqu'il roule sur ledit couple de fractions de pistes de roulement.

13. Procédé selon la revendication 12, comprenant l'étape selon laquelle, à partir d'une courbe représentant la valeur du troisième rapport permettant de supprimer le glissement de l'organe de roulement en fonction de l'ordre auquel le corps pendulaire est accordé, cette courbe étant tracée par interpolation et/ou extrapolation à partir de points obtenus pour des ordres prédéfinis, on obtient la valeur du troisième rapport permettant de supprimer le glissement de l'organe de roulement pour tout ordre auquel peut être accordé le corps pendulaire.

14. Dispositif (1) d'amortissement pendulaire, comprenant :
- un support (2) apte à se déplacer en rotation autour d'un axe (X),
- au moins un corps pendulaire (3), mobile par rapport au support (2), et,
- au moins un organe de roulement (11),
l'organe de roulement (11) comprenant, afin de guider le déplacement du corps pendulaire (3) par rapport au support (2):
- une première portion cylindrique (20) de premier rayon (R1) coopérant avec au moins une première piste de roulement (12) solidaire du support (2), et
- au moins une deuxième portion cylindrique (21) de deuxième rayon (R2) coopérant avec une deuxième piste de roulement (13) solidaire du corps pendulaire (3),
le rapport (η1) entre le deuxième rayon (R2) et le premier rayon (R1) définissant un premier rapport inférieur ou égal à 1,
lors d'au moins une partie de son déplacement, l'organe de roulement (11) roulant simultanément sur un couple de fractions de pistes de roulement (12, 13), formé par une fraction de la deuxième piste de roulement (13) de troisième rayon (R3) et par une fraction de la première piste de roulement (12) de quatrième rayon (R4), le rapport (η2) entre le troisième rayon (R3) et le quatrième rayon (R4) définissant un deuxième rapport pour ledit couple de fractions de pistes de roulement, le deuxième rapport (η2) étant supérieur ou égal à 1.

## Patentansprüche

1. Pendeldämpfungsvorrichtung (1), umfassend:
- einen Träger (2), der geeignet ist, sich um eine Achse (X) drehend zu bewegen,
- mindestens einen Pendelkörper (3), der in Bezug auf den Träger (2) beweglich ist, und
- mindestens ein Wälzorgan (11),
wobei das Wälzorgan (11), um die Bewegung des Pendelkörpers (3) in Bezug auf den Träger (2) zu führen,
umfasst:
- einen ersten zylindrischen Abschnitt (20) mit einem ersten Radius (R1), der mit mindestens einer mit dem Träger (2) fest verbundenen ersten Wälzbahn (12) zusammenwirkt, und
- mindestens einen zweiten zylindrischen Abschnitt (21) mit einem zweiten Radius (R2), der mit einer mit dem Pendelkörper (3) fest verbundenen zweiten Wälzbahn (13) zusammenwirkt,
wobei das Verhältnis (*η*1) zwischen dem zweiten Radius (R2) und dem ersten Radius (R1) ein erstes Verhältnis definiert, das insbesondere kleiner als oder gleich 1 ist,
wobei sich das Wälzorgan (11) bei mindestens einem Teil seiner Bewegung gleichzeitig auf einem Paar von Bruchteilen von Wälzbahnen (12, 13) abwälzt, das durch einen Bruchteil der zweiten Wälzbahn (13) mit einem dritten Radius (R3) und durch einen Bruchteil der ersten Wälzbahn (12) mit einem vierten Radius (R4) gebildet wird, wobei das Verhältnis (*η*2) zwischen dem dritten Radius (R3) und dem vierten Radius (R4) ein zweites Verhältnis für das Paar von Bruchteilen von Wälzbahnen definiert, wobei das Verhältnis (*η*3) zwischen dem zweiten Verhältnis (*η*2) und dem ersten Verhältnis (*η*1) ein drittes Verhältnis für das Paar von Bruchteilen von Wälzbahnen definiert, wobei dieses dritte Verhältnis (*η*3) so gewählt ist, dass das Gleiten des Wälzorgans (11), wenn es sich auf dem Paar von Bruchteilen von Wälzbahnen abwälzt, verringert, insbesondere beseitigt wird.

2. Vorrichtung nach Anspruch 1, wobei sich das Wälzorgan (11) bei der Gesamtheit seiner Bewegung auf aufeinander folgenden Paaren von Bruchteilen von Wälzbahnen abwälzt, wobei jedes Paar durch einen Bruchteil der zweiten Wälzbahn (13) mit einem dritten Radius (R3) und durch einen Bruchteil der ersten Wälzbahn (12) mit einem vierten Radius (R4) gebildet wird, wobei das dritte Verhältnis (*η*3) für jedes Paar von Bruchteilen von Wälzbahnen so gewählt ist, dass das Gleiten des Wälzorgans (11), wenn es sich auf jedem Paar von Bruchteilen von Wälzbahnen abwälzt, verringert, insbesondere beseitigt wird.

3. Vorrichtung nach Anspruch 1 oder 2, wobei das zweite Verhältnis (*η*2) für das Paar von Bruchteilen von Wälzbahnen größer als oder gleich 1 ist.

4. Vorrichtung nach einem der Ansprüche 1 bis 3, wobei das dritte Verhältnis (*η*3) von der Ordnung abhängig ist, auf die der Pendelkörper (3) abgestimmt ist.

5. Vorrichtung nach Anspruch 4, wobei der Pendelkörper (3) auf die Ordnung 1 abgestimmt ist und wobei das oder jedes dritte Verhältnis (*η*3), bis auf 20 % genau, gleich 2,3 ist oder
wobei der Pendelkörper (3) auf die Ordnung 1,5 abgestimmt ist und wobei das oder jedes dritte Verhältnis (*η*3), bis auf 20 % genau, gleich 1,6 ist oder
wobei der Pendelkörper (3) auf die Ordnung 2 abgestimmt ist und wobei das oder jedes dritte Verhältnis (*η*3), bis auf 20 % genau, gleich 1,33 ist oder
wobei der Pendelkörper (3) auf die Ordnung 3 abgestimmt ist und wobei das oder jedes dritte Verhältnis (*η*3), bis auf 20 % genau, gleich 1,15 ist oder
wobei der Pendelkörper (3) auf die Ordnung 4 abgestimmt ist und wobei das oder jedes dritte Verhältnis (*η*3), bis auf 20 % genau, gleich 1,1 ist.

6. Vorrichtung nach einem der vorhergehenden Ansprüche, wobei die mit dem Träger (2) fest verbundene erste Wälzbahn (12) einen einzigen vierten Radius (R4) definiert und wobei die mit dem Pendelkörper (3) fest verbundene zweite Wälzbahn (13) einen einzigen dritten Radius (R3) definiert.

7. Vorrichtung nach einem der vorhergehenden Ansprüche, wobei die mit dem Träger (2) fest verbundene erste Wälzbahn (12) und die mit dem Pendelkörper (3) fest verbundene zweite Wälzbahn (13) derartige Formen haben, dass der Pendelkörper (3) translatorisch um eine fiktive Achse, die parallel zur Drehachse (X) des Trägers (2) ist, und rotatorisch um den Schwerpunkt des Pendelkörpers (3) geführt wird.

8. Vorrichtung nach dem vorhergehenden Anspruch, wobei der Kombinationsprozentsatz (M_{R}) für die Bewegung des Pendelkörpers (3) definiert ist als gleich dem Quotienten zwischen:
- dem Abstand des Schwerpunkts des Pendelkörpers (3) zur Drehachse (X) des Trägers und
- dem Abstand zwischen diesem Schwerpunkt des Pendelkörpers (3) und dem momentanen Drehmittelpunkt dieses Pendelkörpers (3),
und wobei das dritte Verhältnis (*η*3) von dem Kombinationsprozentsatz (M_{R}) abhängig ist.

9. Vorrichtung nach Anspruch 8, wobei der Pendelkörper (3) auf die Ordnung 1 abgestimmt ist, wobei er einen Kombinationsprozentsatz (M_{R}) gleich 100 % aufweist, und wobei das oder jedes dritte Verhältnis (*η*3), bis auf 20 % genau, gleich 2,3 ist, oder
wobei der Pendelkörper (3) auf die Ordnung 1,5 abgestimmt ist, wobei er einen Kombinationsprozentsatz (M_{R}) gleich 100 % aufweist, und wobei das oder jedes dritte Verhältnis (*η*3), bis auf 20 % genau, gleich 1,6 ist, oder wobei der Pendelkörper (3) auf die Ordnung 2 abgestimmt ist, wobei er einen Kombinationsprozentsatz (M_{R}) gleich 100 % aufweist, und wobei das oder jedes dritte Verhältnis (*η*3), bis auf 20 % genau, gleich 1,33 ist, oder
wobei der Pendelkörper (3) auf die Ordnung 3 abgestimmt ist, wobei er einen Kombinationsprozentsatz (M_{R}) gleich 100 % aufweist, und wobei das oder jedes dritte Verhältnis (*η*3), bis auf 20 % genau, gleich 1,15 ist, oder
wobei der Pendelkörper (3) auf die Ordnung 4 abgestimmt ist, wobei er einen Kombinationsprozentsatz (M_{R}) gleich 100 % aufweist, und wobei das oder jedes dritte Verhältnis (*η*3), bis auf 20 % genau, gleich 1,1 ist.

10. Vorrichtung nach einem der vorhergehenden Ansprüche, wobei der Pendelkörper (3) eine erste und eine zweite Pendelmasse (5) umfasst, die axial zueinander beabstandet sind und in Bezug auf den Träger (2) beweglich sind, wobei die erste Pendelmasse (5) axial auf einer ersten Seite (4) des Trägers (2) angeordnet ist und wobei die zweite Pendelmasse (5) axial auf einer zweiten Seite (4) des Träger (2) angeordnet ist, und wobei mindestens ein Verbindungsorgan (6) zum Verbinden der ersten und der zweiten Pendelmasse (5) die Pendelmassen (5) zu einem Paar verbindet, wobei jede der ersten und der zweiten Pendelmasse (5) eine zweite Wälzbahn (13) definiert.

11. Komponente für ein Antriebssystem eines Kraftfahrzeugs, wobei die Komponente insbesondere ein Zweimassenschwungrad, ein hydrodynamischer Drehmomentwandler, ein mit der Kurbelwelle fest verbundenes Schwungrad, eine trockenlaufende oder nasslaufende Doppelkupplung oder eine Reibscheibe für eine Kupplung oder eine nasslaufende Einfachkupplung mit einer Dämpfungsvorrichtung (1) nach einem der Ansprüche 1 bis 10 ist.

12. Verfahren zur Dimensionierung einer Pendeldämpfungsvorrichtung, umfassend:
- einen Träger, der geeignet ist, sich um eine Achse drehend zu bewegen,
- mindestens einen Pendelkörper, der in Bezug auf den Träger beweglich ist, und
- mindestens ein Wälzorgan,
wobei das Wälzorgan, um die Bewegung des Pendelkörpers in Bezug auf den Träger zu führen, umfasst:
- einen ersten zylindrischen Abschnitt mit einem ersten Radius, der mit mindestens einer mit dem Träger fest verbundenen ersten Wälzbahn zusammenwirkt, und
- mindestens einen zweiten zylindrischen Abschnitt mit einem zweiten Radius, der mit einer mit dem Pendelkörper fest verbundenen zweiten Wälzbahn zusammenwirkt,
wobei das Verhältnis zwischen dem zweiten Radius und dem ersten Radius ein erstes Verhältnis definiert, das kleiner als oder gleich 1 ist,
wobei sich das Wälzorgan bei mindestens einem Teil seiner Bewegung gleichzeitig auf einem Paar von Bruchteilen von Wälzbahnen abwälzt, das durch einen Bruchteil der zweiten Wälzbahn mit dem dritten Radius und durch einen Bruchteil der ersten Wälzbahn mit dem vierten Radius gebildet wird,
wobei das Verhältnis zwischen dem dritten Radius und dem vierten Radius ein zweites Verhältnis für das Paar von Bruchteilen von Wälzbahnen definiert,
wobei das Verfahren umfasst:
- den Schritt, gemäß dem man das Verhältnis zwischen dem zweiten Verhältnis und dem ersten Verhältnis, das ein drittes Verhältnis für das Paar von Bruchteilen von Wälzbahnen definiert, so wählt, dass das Gleiten des Wälzorgans, wenn es sich auf dem Paar von Bruchteilen von Wälzbahnen abwälzt, verringert, insbesondere beseitigt wird.

13. Verfahren nach Anspruch 12, umfassend dem Schritt, gemäß dem man anhand einer Kurve, die den Wert des dritten Verhältnisses darstellt, das es ermöglicht, das Gleiten des Wälzorgans in Abhängigkeit von der Ordnung, auf die der Pendelkörper abgestimmt ist, zu beseitigen, wobei diese Kurve durch Interpolation und/oder Extrapolation anhand von Punkten gezeichnet wird, die für vorgegebene Ordnungen erhalten werden, den Wert des dritten Verhältnisses, das es ermöglicht, das Gleiten des Wälzorgans zu beseitigen, für jede Ordnung erhält, auf die der Pendelkörper abgestimmt sein kann.

14. Pendeldämpfungsvorrichtung (1), umfassend:
- einen Träger (2), der geeignet ist, sich um eine Achse (X) drehend zu bewegen,
- mindestens einen Pendelkörper (3), der in Bezug auf den Träger (2) beweglich ist, und
- mindestens ein Wälzorgan (11),
wobei das Wälzorgan (11), um die Bewegung des Pendelkörpers (3) in Bezug auf den Träger (2) zu führen,
umfasst:
- einen ersten zylindrischen Abschnitt (20) mit einem ersten Radius (R1), der mit mindestens einer mit dem Träger (2) fest verbundenen ersten Wälzbahn (12) zusammenwirkt, und
- mindestens einen zweiten zylindrischen Abschnitt (21) mit einem zweiten Radius (R2), der mit einer mit dem Pendelkörper (3) fest verbundenen zweiten Wälzbahn (13) zusammenwirkt,
wobei das Verhältnis (*η*1) zwischen dem zweiten Radius (R2) und dem ersten Radius (R1) ein erstes Verhältnis definiert, das kleiner als oder gleich 1 ist,
wobei sich das Wälzorgan (11) bei mindestens einem Teil seiner Bewegung gleichzeitig auf einem Paar von Bruchteilen von Wälzbahnen (12, 13) abwälzt, das durch einen Bruchteil der zweiten Wälzbahn (13) mit dem dritten Radius (R3) und durch einen Bruchteil der ersten Wälzbahn (12) mit dem vierten Radius (R4) gebildet wird, wobei das Verhältnis (*η*2) zwischen dem dritten Radius (R3) und dem vierten Radius (R4) ein zweites Verhältnis für das Paar von Bruchteilen von Wälzbahnen definiert, wobei das zweite Verhältnis (*η*2) größer als oder gleich 1 ist.

## Claims

1. Pendulum damping device (1), comprising:
- a support (2) that is able to move in rotation about an axis (X),
- at least one pendulum body (3), which is able to move relative to the support (2), and,
- at least one rolling member (11),
the rolling member (11) comprising, in order to guide the movement of the pendulum body (3) relative to the support (2) :
- a first cylindrical portion (20) of first radius (R1) cooperating with at least one first raceway (12) as one with the support (2), and
- at least one second cylindrical portion (21) of second radius (R2) cooperating with a second raceway (13) as one with the pendulum body (3),
the ratio (η1) between the second radius (R2) and the first radius (R1) defining a first ratio that is in particular less than or equal to 1,
during at least part of its movement, the rolling member (11) rolling simultaneously on a pair of fractions of raceways (12, 13), which is formed by a fraction of the second raceway (13) of third radius (R3) and by a fraction of the first raceway (12) of fourth radius (R4), the ratio (η2) between the third radius (R3) and the fourth radius (R4) defining a second ratio for said pair of fractions of raceways, the ratio (η3) between the second ratio (η2) and the first ratio (η1) defining a third ratio for said pair of fractions of raceways, this third ratio (η3) being chosen so as to reduce, in particular eliminate, slipping of the rolling member (11) as it rolls on said pair of fractions of raceways.

2. Device according to Claim 1, the rolling member (11) rolling, during the entirety of its movement, on successive pairs of fractions of raceways, each pair being formed by a fraction of the second raceway (13) of third radius (R3) and by a fraction of the first raceway (12) of fourth radius (R4), the third ratio (η3) being chosen for each pair of fractions of raceways so as to reduce, in particular eliminate, slipping of the rolling member (11) as it rolls on each pair of fractions of raceways.

3. Device according to Claim 1 or 2, the second ratio (η2) being greater than equal to 1 for said pair of fractions of raceways.

4. Device according to any one of Claims 1 to 3, the third ratio (η3) being a function of the order to which the pendulum body (3) is tuned.

5. Device according to Claim 4, the pendulum body (3) being tuned to the order 1, and the or each third ratio (η3) being equal to 2.3, to within 20%, or
the pendulum body (3) being tuned to the order 1.5, and the or each third ratio (η3) being equal to 1.6, to within 20%, or
the pendulum body (3) being tuned to the order 2, and the or each third ratio (η3) being equal to 1.33, to within 20%, or
the pendulum body (3) being tuned to the order 3, and the or each third ratio (η3) being equal to 1.15, to within 20%, or
the pendulum body (3) being tuned to the order 4, and the or each third ratio (η3) being equal to 1.1, to within 20%.

6. Device according to any one of the preceding claims, the first raceway (12) as one with the support (2) defining a single fourth radius (R4) and the second raceway (13) as one with the pendulum body (3) defining a single third radius (R3).

7. Device according to any one of the preceding claims, the first raceway (12) as one with the support (2) and the second raceway (13) as one with the pendulum body (3) having shapes such that the pendulum body (3) is guided in translation about an imaginary axis parallel to the axis of rotation (X) of the support (2), and in rotation about the centre of gravity of said pendulum body (3).

8. Device according to the preceding claim, the percentage of combination (M_{R}) being defined for the movement of the pendulum body (3) as equal to the ratio between:
- the distance from the centre of gravity of the pendulum body (3) to the axis of rotation (X) of the support, and
- the distance between the centre of gravity of the pendulum body (3) and the instantaneous centre of rotation of this pendulum body (3),
and the third ratio (η3) being a function of the percentage of combination (M_{R}).

9. Device according to Claim 8, the pendulum body (3) being tuned to the order 1, having a percentage of combination (M_{R}) equal to 100%, and the or each third ratio (η3) being equal to 2.3, to within 20%, or
the pendulum body (3) being tuned to the order 1.5, having a percentage of combination (M_{R}) equal to 100%, and the or each third ratio (η3) being equal to 1.6, to within 20%, or
the pendulum body (3) being tuned to the order 2, having a percentage of combination (M_{R}) equal to 100%, and the or each third ratio (η3) being equal to 1.33, to within 20%, or
the pendulum body (3) being tuned to the order 3, having a percentage of combination (M_{R}) equal to 100%, and the or each third ratio (η3) being equal to 1.15, to within 20%, or
the pendulum body (3) being tuned to the order 4, having a percentage of combination (M_{R}) equal to 100%, and the or each third ratio (η3) being equal to 1.1, to within 20%.

10. Device according to any one of the preceding claims, the pendulum body (3) having a first and a second pendulum mass (5) that are spaced apart axially from to one another and are able to move relative to the support (2), the first pendulum mass (5) being disposed axially on a first side (4) of the support (2) and the second pendulum mass (5) being disposed axially on a second side (4) of the support (2), and at least one connecting member (6) of the first and second pendulum masses (5) pairing said pendulum masses (5), each of the first and second pendulum masses (5) defining a second raceway (13).

11. Component for a transmission system of a motor vehicle, the component in particular being a dual mass flywheel, a hydrodynamic torque converter, a flywheel as one with the crankshaft, a wet or dry dual clutch, or a friction disc for a clutch or a single wet clutch, comprising a damping device (1) according to any one of Claims 1 to 10.

12. Method for dimensioning a pendulum damping device, comprising:
- a support that is able to move in rotation about an axis,
- at least one pendulum body, which is able to move relative to the support, and,
- at least one rolling member,
the rolling member comprising, in order to guide the movement of the pendulum body relative to the support:
- a first cylindrical portion of first radius cooperating with at least one first raceway as one with the support, and
- at least one second cylindrical portion of second radius cooperating with a second raceway as one with the pendulum body,
the ratio between the second radius and the first radius defining a first ratio less than or equal to 1,
during at least part of its movement, the rolling member rolling simultaneously on a pair of fractions of raceways, which is formed by a fraction of the second raceway of third radius and by a fraction of the first raceway of fourth radius, the ratio between the third radius and the fourth radius defining a second ratio for said pair of fractions of raceways,
the method comprising:
- the step in which is chosen the ratio between the second ratio and the first ratio, which defines a third ratio for said pair of fractions of raceways, so as to reduce, in particular eliminate, slipping of the rolling member as it rolls on said pair of fractions of raceways.

13. Method according to Claim 12, comprising the step in which, on the basis of a curve representing the value of the third ratio making it possible to eliminate slipping of the rolling member as a function of the order to which the pendulum body is tuned, this curve being plotted by interpolation and/or extrapolation on the basis of points obtained for predefined orders, is obtained the value of the third ratio making it possible to eliminate slipping of the rolling member for any order to which the pendulum body may be tuned.

14. Pendulum damping device (1), comprising:
- a support (2) that is able to move in rotation about an axis (X),
- at least one pendulum body (3), which is able to move relative to the support (2), and,
- at least one rolling member (11),
the rolling member (11) comprising, in order to guide the movement of the pendulum body (3) relative to the support (2) :
- a first cylindrical portion (20) of first radius (R1) cooperating with at least one first raceway (12) as one with the support (2), and
- at least one second cylindrical portion (21) of second radius (R2) cooperating with a second raceway (13) as one with the pendulum body (3),
the ratio (η1) between the second radius (R2) and the first radius (R1) defining a first ratio less than or equal to 1,
during at least part of its movement, the rolling member (11) rolling simultaneously on a pair of fractions of raceways (12, 13), which is formed by a fraction of the second raceway (13) of third radius (R3) and by a fraction of the first raceway (12) of fourth radius (R4), the ratio (η2) between the third radius (R3) and the fourth radius (R4) defining a second ratio for said pair of fractions of raceways, the second ratio (η2) being greater than or equal to 1.
